# EUROPÄISCHE PATENTSCHRIFT

(11) **EP 1 063 074 B1**
(45) Veröffentlichungstag und Bekanntmachung des Hinweises auf die Patenterteilung: **15.01.2003**
(21) Anmeldenummer: 00113327.1
(22) Anmeldetag: 23.06.2000
(51) Int. Cl.: B29C 47/22

(54) **Verfahren zum Einrichten einer Ringspaltdüse zur Herstellung von schlauchförmigen Vorformlingen**
Method of configuring an annular nozzle for manufacturing tubular preforms
Procédé pour configurer une buse annulaire pour la fabrication de préformes tubulaires

(30) Priorität: 25.06.1999 DE 19929381
(43) Veröffentlichungstag der Anmeldung: 27.12.2000
(73) Patentinhaber: Feuerherm, Harald, D-53840 Troisdorf (DE)
(72) Erfinder: Feuerherm, Harald, D-53840 Troisdorf (DE)
(74) Vertreter: Nunnenkamp, Jörg, Dr.

(56) Entgegenhaltungen:
- EP-A- 0 945 245
- DE-U- 29 910 288
- US-A- 3 114 932
- US-A- 4 869 862
- PATENT ABSTRACTS OF JAPAN vol. 010, no. 227 (M-505), 7. August 1986 (1986-08-07) & JP 61 061809 A (NISSAN MOTOR CO LTD), 29. März 1986 (1986-03-29)
- PATENT ABSTRACTS OF JAPAN vol. 017, no. 524 (M-1483), 21. September 1993 (1993-09-21) & JP 05 138715 A (TSUTSUNAKA PLAST IND CO LTD), 8. Juni 1993 (1993-06-08)

## Beschreibung

Die Erfindung betrifft ein Verfahren zum Einrichten einer Ringspaltdüse zur Herstellung von schlauchförmigen Vorformlingen, die in einer Blasform zu Kunststoffbehältern aufgeweitet werden. Ein solches Verfahren ist beispielsweise in US 3 114 932 beschrieben. Es ist ferner bekannt, Wandflächen der Ringspaltdüse mit einem Profil zu versehen, um die Schmelzeverteilung im Vorformling zu verändern (US 4 869 862).

Das erfindungsgemäße Verfahren setzt eine Ringspaltdüse voraus mit einem von einem Dorn und einem ringförmigen Düsenkörper begrenzten Schmelzekanal, wobei am düsenaustrittsseitigen Ende des Schmelzekanals eine elastisch deformierbare Hülse vorgesehen ist, deren Querschnittsprofil durch radiale Stellelemente einstellbar ist. Durch programmgesteuerte axiale Stellbewegungen des Dorns und/oder des Düsenkörpers ist die Spaltbreite des Düsenaustrittsspaltes während des Schlauchaustrittes veränderbar. Eine Ringspaltdüse des beschriebenen Aufbaus ist beispielsweise aus DE 28 23 999 C2 und JP 61061809 A in verschiedenen Ausführungsformen bekannt.

Die elastisch deformierbare Hülse ist ein dünnwandiges Metallteil, das beim Einrichten der Ringspaltdüse mittels Stellschrauben stark verformt wird, wenn z. B. Kanister mit rechteckförmigem Querschnitt hergestellt werden sollen. Die Metallhülse wird dabei mechanisch stark beansprucht, zumal für jeden Produktionsfall, das heißt beim Einstellen eines neuen Behältergewichtes, bei Verwendung eines anderen Kunststoffmaterials oder bei einer Änderung des Behälterquerschnitts, Korrekturen an der durch Deformation stark beanspruchten Hülse vorgenommen werden müssen. Je extremer die erforderliche Deformation der Hülse ist, desto geringer ist ihre Standzeit. Die Praxis zeigt, dass eine stark deformierte Hülse irreversibel geschädigt sein kann und reißen kann, wenn bei einer Produktionsumstellung eine andere Einstellung vorgenommen wird. Wenn die stark deformierte Ringspaltdüse für ein anderes Produkt eingestellt werden muß, muß daher in der Praxis regelmäßig ein kompletter Austausch der Werkzeuganordnung, die zumeist aus einem Dornoberteil, einem Dorninnenteil und der elastisch verformbaren Hülse besteht, vorgenommen werden.

In vielen Fällen ist es aufgrund der vorgegebenen Materialeigenschaften nicht möglich, die dünnwandige Hülse so weit zu verformen, wie dies für eine optimale Schmelzeverteilung erforderlich wäre.

Nachteilig ist ferner, daß bei einer starken Deformation der Hülse der Düsenspalt nicht nach dem Ausstoß eines Vorformlings geschlossen werden kann. Insbesondere im Ausstoßbetrieb kann es zu einem unkontrollierten Auslaufen der Schmelze zwischen der Fertigung von zwei Vorformlingen kommen.

Der Erfindung liegt die Aufgabe zugrunde, ein Verfahren zum Einrichten einer Ringspaltdüse anzugeben, das mit einer möglichst geringen Beanspruchung der elastisch deformierbaren Hülse verbunden ist. Außerdem soll ein Düsenverschluß im Anschluß an die Bildung eines Vorformlings möglich sein.

Die Aufgabe wird erfindungsgemäß gelöst durch ein Verfahren zum Einrichten einer Ringspaltdüse gemäß dem Patentanspruch 1 mit den folgenden Verfahrensschritten:
**1.1)** Es wird eine Grundprofilierung des Schmelzekanals vorgenommen, die von der Verformung der Hülse unabhängig ist und in Strömungslängsrichtung verlaufende Dick- und Dünnstellen mit einer auf den zu formenden Behälterquerschnitt abgestimmten Verteilung im Schmelzefluß erzeugt;
**1.2)** Bei vorgegebener Grundprofilierung wird der Düsenaustrittsspalt durch Verformung der Hülse so korrigiert, daß die Wandstärke der aus der Blasform ausgeformten Behälter einem Vorgabewert oder einem vorgegebenen Profil entspricht.

vorteilhafte weiterbildungen der Erfindung sind Gegenstand der abhängegen Ansprüche.

Die Grundprofilierung des Schmelzekanals wird so abgestimmt, daß der aus dem Vorformling hergestellte bzw. in der Blasform aufgeweitete Hohlkörper in einem oder mehreren Querschnittsebenen eine Wandstärkenverteilung aufweist, die dem Vorgabewert bzw. dem vorgegebenen Profil nahekommt. Die Festlegung der Grundprofilierung erfolgt rechnerisch oder nach Erfahrungswerten, und zwar vorzugsweise für einen mittleren Abschnitt des Vorformlings, der in der Blasform im wesentlichen nur eine radiale Reckung erfährt. Die Lebensdauer der elastisch deformierbaren Hülse erhöht sich beträchtlich, da ihre Deformation auf einem Bruchteil der nach dem Stand der Technik erforderlichen Deformation reduziert werden kann. Durch die Kombination einer Grundprofilierung des Schmelzekanals und einer Korrekturprofilierung durch Deformation der Hülse kann die Schmelzeverteilung in Umfangsrichtung des Vorformlings außerdem noch feinfühliger eingestellt werden, so daß die Wandstärke der aus der Blasform ausgeformten Behälter mit sehr engen Toleranzen dem Vorgabewert bzw. dem vorgegebenen Profil entspricht.

Eine vorhandene Blasformanlage wird in der Praxis häufig zur Herstellung unterschiedlicher Kunststoffbehälter eingesetzt. Die blasgeformten Behälter können sich in bezug auf ihre Geometrie, in bezug auf ihre Wandstärke und damit das Gewicht sowie in bezug auf den verarbeiteten Kunststoff unterscheiden. Alle diese Größen beeinflussen die bei der Einrichtung der Ringspaltdüse vorzunehmenden Einstellungen bei gleichbleibendem Durchmesser der Ringspaltdüse. Allgemein wurden folgende Abhängigkeiten festgestellt. Je größer die Wandstärke des Behälters ist, desto stärker muß die Profilierung des Schmelzekanals ausgeprägt werden. Bei der Bearbeitung von Kunststoffen, die ein starkes Schwellverhalten aufweisen, muß die Profilierung abgeschwächt werden.

Das erfindungsgemäße Verfahren ist auch vorteilhaft, wenn in der Extrusionsblasformanlage Kunststoffbehälter hergestellt werden, die zwar eine unterschiedliche Wandstärke und damit ein unterschiedliches Behältergewicht aufweisen, sich in bezug auf das verarbeitete Kunststoffmaterial unterscheiden können, und in bezug auf den Behälterquerschnitt gleich oder ähnlich sind. Es wird in diesem Fall eine mittlere Grundprofilierung so gewählt, daß lediglich durch Verformung der Hülse alle gewünschten Produkte hergestellt werden können, ohne daß die Gefahr besteht, daß die Hülse zerstört wird oder nicht optimal eingestellt werden kann. Die stärkste Deformation der elastischen Hülse ist erforderlich, wenn Behälter mit hohem Gewicht hergestellt werden und Kunststoffmaterialien verarbeitet werden, die kein Schwellverhalten aufweisen. Die Deformation der Hülse ist minimal, wenn Behälter mit kleinem Gewicht hergestellt werden und Kunststoffmaterialien mit starkem Schwellverhalten verarbeitet werden. Die Grundprofilierung wird so gewählt, daß lediglich durch die Veränderung der Hülse sowohl der eine als auch der andere Grenzfall abgedeckt werden kann. Zweckmäßig wird die Grundprofilierung des Schmelzekanals erfindungsgemäß für eine Düsenspaltbreite eingerichtet, mit der Vorformlinge für Kunststoffbehälter mittleren Gewichtes hergestellt werden, und wird für die Fertigung geometrisch ähnlicher Behälter mit kleinerem oder größerem Gewicht und/oder bei der Verarbeitung anderer Kunststoffmaterialien lediglich die Verformung der am Düsenaustritt angeordneten Hülse korrigiert.

Die Grundprofilierung des Schmelzekanals wird vorzugsweise an einem Kanalabschnitt oberhalb der Düse durchgeführt. Reicht die Grundprofilierung des Schmelzekanals nicht bis zum Düsenaustritt, ist ein guter Düsenverschluß zwischen zwei nacheinander zu fertigenden Vorformlingen möglich, was vor allem für eine im Ausstoßbetrieb arbeitende Blasformanlage vorteilhaft ist. Ist, z. B. im Ausstoßbetrieb, der Düsenverschluß von besonderer Wichtigkeit, wird die Grundprofilierung zweckmäßig so eingerichtet, daß allein mit der Grundprofilierung die gewünschte Wanddickenverteilung zumindest annähernd erreicht werden kann und die Deformation der Hülse lediglich zur Feinkorrektur und Feinabstimmung vorgenommen wird.

Die Grundprofilierung des Schmelzekanals ist auf verschiedene Weise möglich. Die Grundprofilierung kann durch spanende Bearbeitung eines den Schmelzekanal begrenzenden Bauteils oder durch Einsatz eines Austauschteils eingerichtet werden. Bei Verwendung eines Austauschteils kann dies durch Einbau eines Düsenkörpers, eines Düsenkörpereinsatzes eines Dorns oder eines Dorneinsatzes oder eines der Düse oder des Dorns vorgeschalteten Ringes geschehen, deren kanalseitige Wandflächen ein den Schmelzefluß beeinflussendes Profil besitzen. Auch eine Grundprofilierung an der elastisch deformierbaren Hülse ist möglich. Zu diesem Zweck wird in die Oberfläche der Hülse ein den Schmelzefluß formendes Profil eingearbeitet. Ferner kann zur Grundprofilierung eine zusätzliche elastisch deformierbare Hülse verwendet werden. Schließlich liegt es im Rahmen der Erfindung, die Grundprofilierung des Schmelzekanals mit stellbeweglichen Schiebern einzustellen, durch deren Stellbewegung der Kanalquerschnitt des Schmelzekanals verändert wird. Stets gilt für die Grundprofilierung, daß das die Dick- und Dünnstellen im Schmelzefluß erzeugende Profil in Fließrichtung eine konstante Profiltiefe, eine zum Düsenende vergrößerte Profiltiefe oder auch eine beliebig andere Kontur aufweisen kann. Gemäß einer vor allem für den Ausstoßbetrieb bevorzugten Ausführung der Erfindung nimmt die Profiltiefe des den Schmelzefluß beeinflussenden Profils zum Ende des Düsenaustrittsspaltes ab, so daß die Grundprofilierung im Austrittsquerschnitt Null oder vernachlässigbar klein ist.

Zweckmäßig wird die Grundprofilierung so eingerichtet, daß die Profilierung des aus dem Düsenspalt austretenden schlauchförmigen Vorformlings verstärkt wird, wenn der Düsenspalt breiter ist als ein Referenzwert, und daß die Profilierung des aus dem Düsenspalt austretenden Schlauchvorformlings abgeschwächt wird, wenn der Düsenspalt schmaler ist als der Referenzwert.
Die auf die Grundprofilierung abzustimmende Verformung der Hülse kann ebenfalls auf verschiedene Weise vorgenommen werden und hängt davon ab, ob die Hülse als Manschette am Dorn oder als ringförmiges Bauteil am Düsenkörper angeordnet ist. Die Hülse kann durch Stellmittel, z. B. in Form von Stellschrauben und/oder Einsätzen, verformt werden. Diese Ausführungsformen bietet sich an, wenn die Hülse als ringförmiges Bauteil im Düsenkörper oder am Dorn angeordnet ist. Ist die Hülse als Manschette am Dorn angeordnet, werden zur Deformation der Hülse vorzugsweise Dorneinsätze verwendet, die je nach der gewünschten Deformierung ausgetauscht oder am Dorn verstellt werden. Die Einsätze sind unterseitig in die Ringspaltdüse einsetzbar und weisen vorher eingestellte Stellelemente auf. Die Verwendung von Einsätzen zur Deformation der Hülse erlaubt sehr rasche Umstellungen, wenn Kunststoffbehälter mit vorgegebenem, aber unterschiedlichen Gewichten hergestellt werden müssen. Die Verwendung von Einsätzen, welche die Hülse in einer vorgegebenen definierten Weise deformieren, ist nicht nur dann vorteilhaft, wenn mit derselben Grundprofilierung des Schmelzekanals weitergearbeitet werden kann, sondern für jede neue Anpassung der deformierbaren Hülse.

Im folgenden wird die Erfindung anhand einer lediglich ein Ausführungsbeispiel darstellenden Zeichnung erläutert. Es zeigen schematisch
- **Fig. 1**: einen Längsschnitt durch eine Ringspaltdüse, die nach dem erfindungsgemäßen Verfahren eingerichtet worden ist,
- **Fig. 2**: den Schnitt A-A aus Fig. 1,
- **Fig. 3 bis 8**: weitere Ausführungsbeispiele von Ringspaltdüsen, die ebenfalls nach dem erfindungsgemäßen Verfahren eingerichtet worden sind.

Die in den Figuren dargestellten Ringspaltdüsen werden zur Herstellung von schlauchförmigen Vorformlingen eingesetzt, die in einer nicht dargestellten Blasform anschließend zu Kunststoffbehältern aufgeweitet werden. In ihrem grundsätzlichen Aufbau weisen die Ringspaltdüsen jeweils einen von einem Dorn 1 und einem ringförmigen Düsenkörper 2 begrenzten Schmelzekanal 3 auf. Am düsenaustrittsseitigen Ende des Schmelzekanals 3 ist eine elastisch deformierbare Hülse 4 vorgesehen, deren Querschnittsprofil durch radiale Stellelemente 5 einstellbar ist. Die Hülse 4 ist z. B. als dünnwandiges Metallbauteil ausgeführt und kann als Manschette am Dorn 1 oder als ringförmiges Bauteil im Düsenkörper 2 angeordnet sein.

Vor jedem neuen Produktionsfall, also z. B. bei der Einstellung eines neuen Behältergewichtes, bei Verwendung eines neuen Kunststoffmaterials oder bei der Herstellung von Kunststoffbehältern mit einem anderen Querschnitt, muß die Ringspaltdüse eingerichtet werden. Dazu wird eine Grundprofilierung des Schmelzekanals 3 vorgenommen, die von der Verformung der Hülse 4 unabhängig ist und in Strömungslängsrichtung verlaufende Dick- und Dünnstellen mit einer auf den zu formenden Behälterquerschnitt abgestimmten Verteilung im Schmelzefluß erzeugt. Nachdem die Grundprofilierung vorgenommen ist, wird der Düsenaustrittsspalt anschließend durch Verformung der Hülse 4 so korrigiert, daß die Wandstärke der aus der Blasform ausgeformten Behälter einem Vorgabewert oder einem vorgegebenen Profil entspricht.

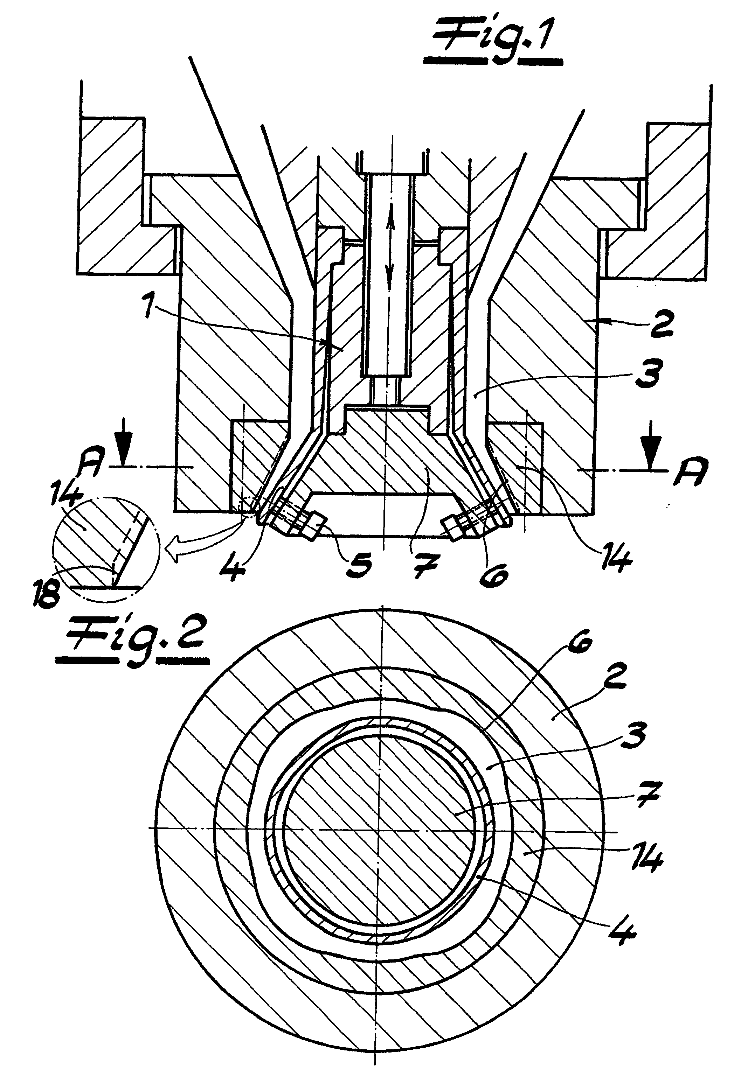

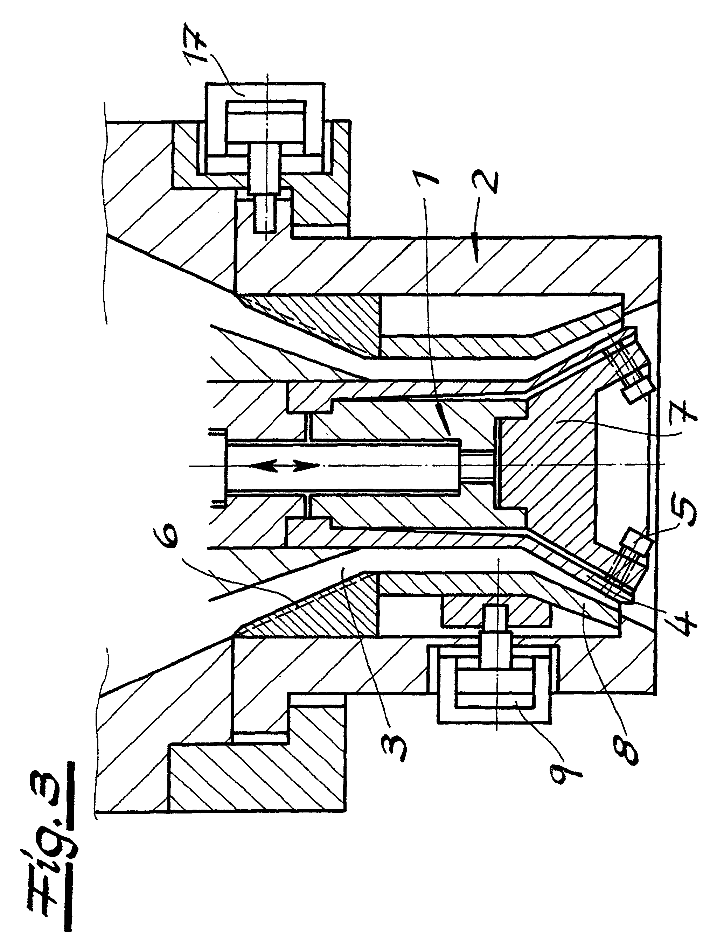

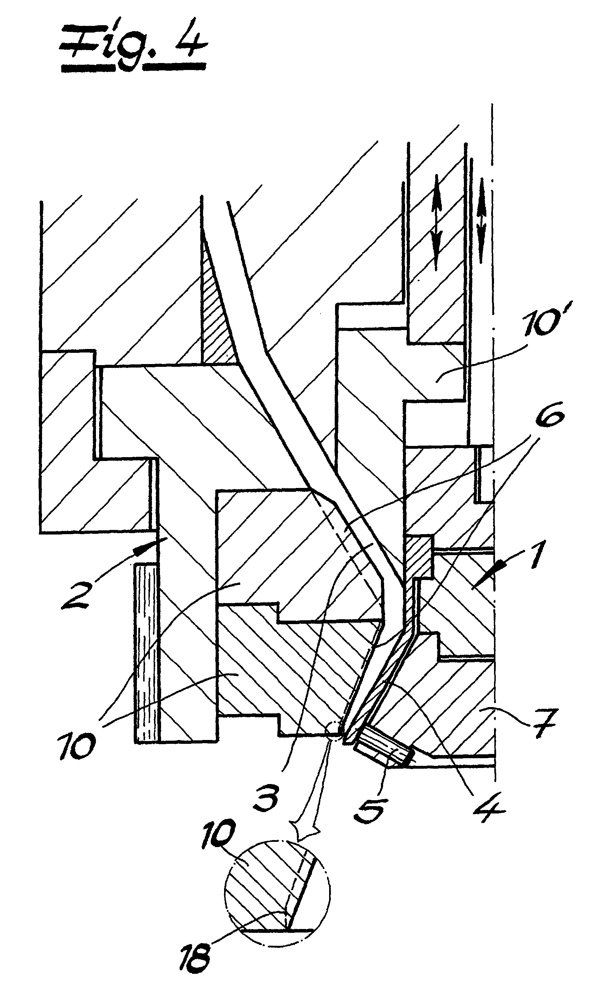

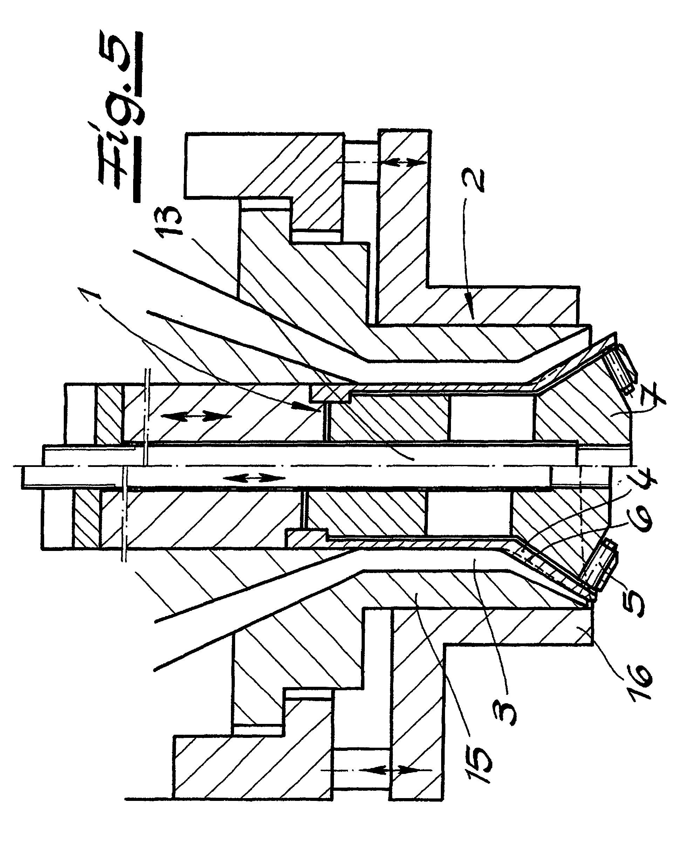

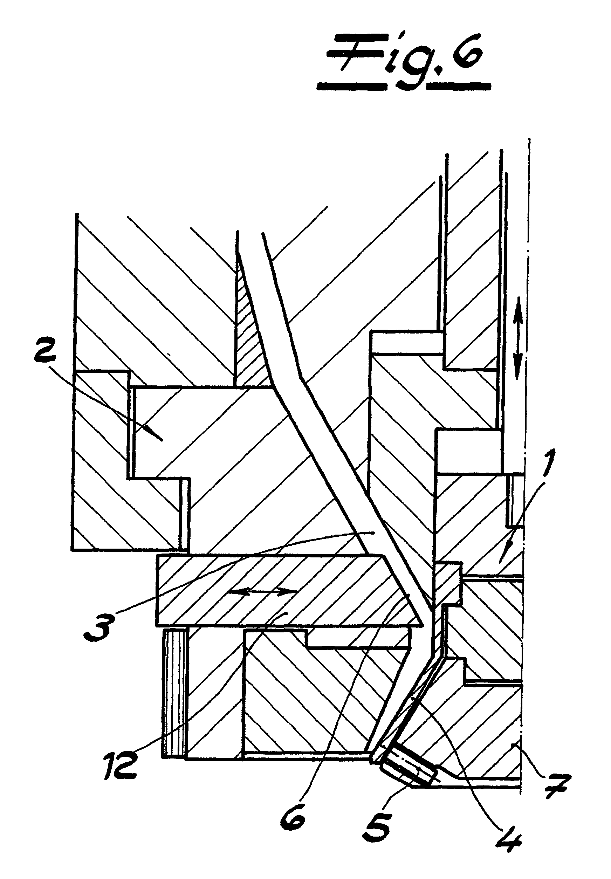

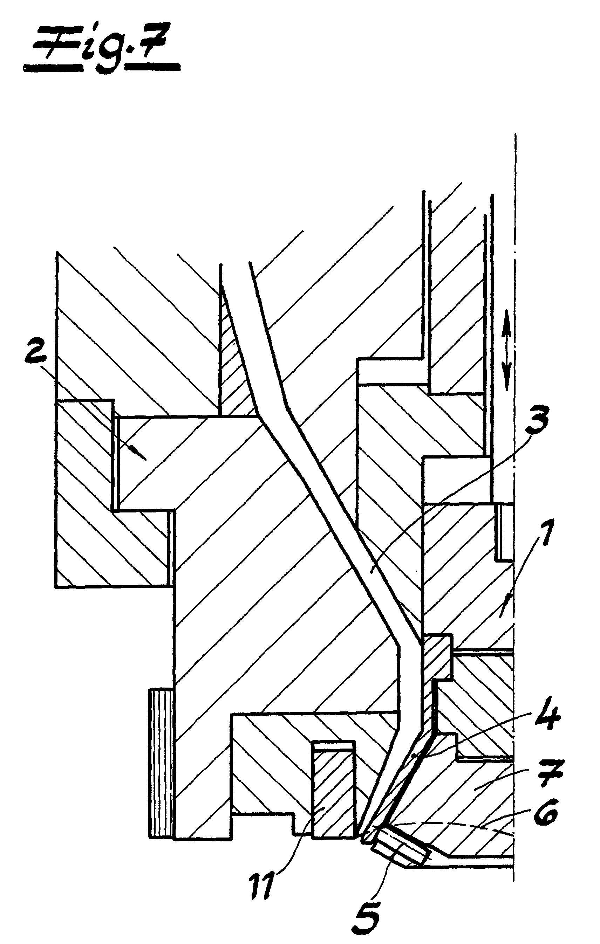

Bei der in den Fig. 1 und 2 dargestellten Ringspaltdüse besitzt die kanalseitige Wandfläche des Düsenkörpers 2 ein den Schmelzefluß beeinflussendes Profil 6. Insbesondere der Fig. 2 entnimmt man, daß das Wandprofil im Querschnitt ein wellenförmiges Profil 6 aufweist, so daß im Schmelzefluß Dick- und Dünnstellen entstehen. Die Grundprofilierung des Schmelzekanals wird durch den Einbau des Düsenkörpers oder eines Düsenkörpereinsatzes 14 durchgeführt.

Das Profil 6 hat in Fließrichtung zum Beispiel eine konstante Profiltiefe, kann aber auch einen beliebigen Profilverlauf in Fließrichtung besitzen. Die Grundprofilierung erstreckt sich im Ausführungsbeispiel nicht bis zum Austrittsquerschnitt. Die Profiltiefe nimmt in einer Übergangszone 18 vor dem Ende des Düsenaustrittsspaltes ab, so daß die Grundprofilierung im Austrittsquerschnitt Null oder vernachlässigbar klein ist. Dies ermöglicht es zum Beispiel bei einer im Ausstoßbetrieb arbeitenden Blasformanlage, den Düsenspalt nach dem Ausstoß eines Vorformlings zu schließen.

Die elastisch deformierbare Hülse 4 ist als Manschette ausgebildet und am Dorn 1 angeordnet. Zur Verformung der Hülse 4 werden austauschbare Einsätze 7 verwendet, die unterseitig in die elastische Hülse 4 einführbar sind und vorher eingestellte Stellelemente 5 aufweisen. Es versteht sich, daß Korrekturen an den Stellelementen 5 nach dem Einbau des Einsatzes 7 noch möglich sind.

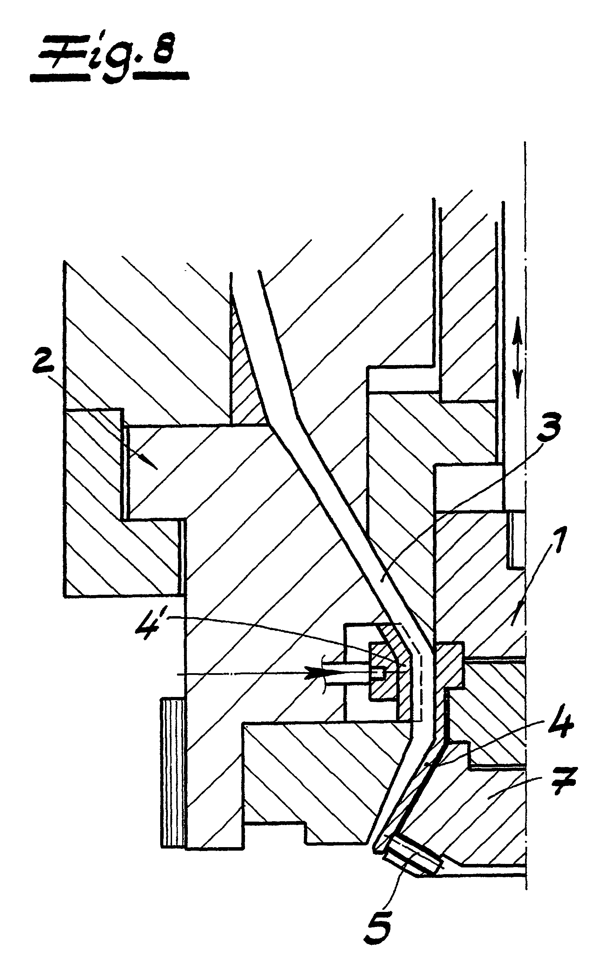

Bei der in Fig. 3 dargestellten Ausführung ist das Profil 6 für die Grundprofilierung des Schmelzekanals an einem Kanalabschnitt oberhalb der elastischen Hülse 4 angeordnet. Dargestellt ist die Profilierung an einem Abschnitt innerhalb der Düse. Sie kann auch an einem der Düse vorgeschalteten Abschnitt düsen- oder dornseitig vorgesehen sein. Der Dorn 1 ist mit der bereits beschriebenen elastisch deformierbaren und im Zuge des erfindungsgemäßen Verfahrens eingestellten elastischen Hülse 4, die im folgenden auch als statisch deformierbarer flexibler Ring (SFDR) bezeichnet wird, ausgerüstet. Ferner erkennt man am Düsenaustritt einen weiteren Ring 8, dem radiale Stellantriebe 9 zugeordnet sind. Meistens sind zwei Stellantriebe 9 gegenüberliegend in der selben Querschnittsebene angeordnet. Der Ring 8 ist ebenfalls elastisch deformierbar und außerdem radial verschiebbar. Im folgenden wird er daher auch als dynamisch flexibler deformierbarer Ring (DFDR) bezeichnet. Die Stellbewegungen der Stellantriebe 9 sind programmgesteuert. Durch programmgesteuerte Stellbewegungen des Dorns 1 und des DFDR-Rings 8 wird der Düsenaustrittsspalt während des Austritts eines schlauchförmigen Vorformlings laufend verändert. Im allgemeinen erfolgt die Steuerung so, daß Anfangs- und Endabschnitte des Vorformlings, die in der Blasform zu einem Behälterboden und einem Behälterkopf aufgeweitet werden und einer besonders starken Reckung unterliegen, eine größere Wandstärke aufweisen und der Austrittsspalt entsprechend breit eingestellt wird. Ein Zusatzstellantrieb 17 kann zusätzlich den Düsenkörper 2 radial verschieben. Ein entsprechender, auf den Düsenkörper 2 wirkender Zusatzstellantrieb 17 kann auch bei der in Fig. 1 dargestellten Ausführung vorgesehen sein, wobei der Zusatzstellantrieb 17 programmgesteuert oder zu Einstellzwecken verwendet wird. Zwischen der Herstellung der einzelnen Vorformlinge ist ein Düsenverschluß möglich, indem der Dorn 1 in die Schließstellung bewegt wird und der statisch deformierbare Ring 4 des Dorns 1 gegen den DFDR-Ring 8 bewegt wird.

Bei der in Fig. 4 dargestellten Ausführung ist das Profil 6 zur Grundprofilierung des Schmelzekanals 3 an ringförmigen Düsenkörpereinsätzen 10 angeordnet. Ebenso kann die Grundprofilierung an einem Abschnitt des Dorns, z. B. dem Bauteil 10', vorgesehen sein. Die Grundprofilierung des Schmelzekanals wird durchgeführt, indem mindestens ein Düsenkörpereinsatz 10 ausgewechselt wird bzw. das Bauteil 10' verstellt wird.

Bei dem in Fig. 5 dargestellten Ausführungsbeispiel ist in die Oberfläche der elastisch deformierbaren Hülse 4 ein den Schmelzefluß formendes Profil 6 eingearbeitet, dessen Profiltiefe zum Ende des Düsenaustrittsspaltes abnimmt. Durch Austausch der elastisch deformierbaren Hülse 4, also des SFDR-Rings, wird die Grundprofilierung des Schmelzekanals 3 eingerichtet. Durch axiale Verstellung des Einsatzes 7 mittels einer Spindel 13 wird die Hülse 4 deformiert. Das Einziehen bewirkt eine starke Profilierung und das Lösen eine geringere Profilierung der Hülse 4. Bei dieser Ausführung entfällt in den meisten Fällen das Auswechseln des Einsatzes, so daß z. B. Gewichtsumstellungen schneller durchgeführt werden können.

Der Düsenkörper 2 besteht bei der in Fig. 5 dargestellten Ausführung aus einem maschinenfest angeordneten Ring 15 und einer axial verstellbaren Profilhülse 16, deren Stirnfläche ein auf den Schmelzefluß einwirkendes wellenförmiges Profil aufweist. Auch die Stirnfläche des maschinenfesten Ringes 15 kann mit einem wellenförmigen Profil versehen sein. Wird die Profilhülse 16 z. B. bis zum Anschlag an den maschinenfesten Ring 15 zurückbewegt, so wirkt lediglich der maschinenfeste Ring 15 auf den Schmelzestrom ein, und die Profilhülse 16 ist ohne Wirkung (rechte Darstellung in der Fig. 5). Wird die Profilhülse 16 über den äußeren Rand des maschinenfesten Ringes 15 vorgeschoben, greifen in Abhängigkeit von der Position der Profilhülse und nach Maßgabe der Kontur des wellenförmigen Profils Abschnitte der Profilhülse mehr oder weniger stark in den Schmelzestrom ein und erzeugen Dick- und/oder Dünnstellen im Vorformling. Die Bewegung der Profilhülse 16 ist vorzugsweise programmgesteuert.

Bei den in den Fig. 6 und 7 dargestellten Ausführungen wird die Grundprofilierung des Schmelzekanals 3 mit stellbeweglichen Schiebern 11, 12 eingestellt, durch deren Stellbewegung der Kanalquerschnitt des Schmelzekanals 3 veränderbar ist. Die Schieber 11, 12 können, wie Fig. 6 dargestellt, radial beweglich angeordnet sein oder aus einer axial verstellbaren Hülse (Fig. 7) bestehen. Im Ausführungsbeispiel der Fig. 7 ist die schieberbewegliche Hülse 11 am Düsenaustritt angeordnet, wobei die den Schmelzefluß beeinflußende Unterkante mit einem wellenförmigen Profil 6 ausgebildet ist.

Die in Fig. 8 dargestellte Ausführung weist zusätzlich zu der am Düsenaustritt angeordneten elastisch verformbaren Hülse 4 eine zweite elastisch verformbare Hülse 4' auf, die zur Grundprofilierung verwendet wird. Die Grundprofilierung des Schmelzekanals wird also durch Einstellung einer weiteren elastisch deformierbaren Hülse 4' vorgenommen. Die zur Grundprofilierung verwendete Hülse 4' ist an einem Kanalabschnitt oberhalb des Düsenaustrittsspaltes angeordnet.

Die beschriebenen Maßnahmen können in beliebiger Weise kombiniert werden.

## Patentansprüche

1. Verfahren zum Einrichten einer Ringspaltdüse zur Herstellung von schlauchförmigen Vorformlingen, die in einer Blasform zu Kunststoffbehältern aufgeweitet werden, wobei die Ringspaltdüse einen von einem Dorn (1) und einem ringförmigen Düsenkörper (2) begrenzten Schmelzekanal (3) aufweist und wobei am düsenaustrittsseitigen Ende des Schmelzekanals (3) eine elastisch deformierbare Hülse (4) vorgesehen ist, deren Querschnittsprofil durch radiale Stellelemente (5) einstellbar ist, mit den folgenden Verfahrensschritten:
**1.1)** Es wird eine Grundprofilierung des Schmelzekanals vorgenommen, die von der Verformung der Hülse (4) unabhängig ist und in Strömungslängsrichtung verlaufende Dick- und Dünnstellen mit einer auf den zu formenden Behälterquerschnitt abgestimmten Verteilung im Schmelzefluss erzeugt;
**1.2)** bei vorgegebener Grundprofilierung wird der Düsenaustrittsspalt durch Verformung der Hülse (4) so korrigiert, dass die Wandstärke der aus der Blasform ausgeformten Behälter einem Vorgabewert oder einem vorgegebenen Profil entspricht.

2. Verfahren nach Anspruch 1, **dadurch gekennzeichnet, dass** die Grundprofilierung des Schmelzekanals für eine Düsenspaltbreite eingerichtet wird, mit der Vorformlinge für Kunststoffbehälter mittleren Gewichts hergestellt werden, und dass für die Fertigung geometrisch ähnlicher Behälter mit kleinerem oder größerem Gewicht lediglich die Verformung der am Düsenaustritt angeordneten Hülse korrigiert wird.

3. Verfahren nach Anspruch 1 oder 2, **dadurch gekennzeichnet, daß** die Grundprofilierung des Schmelzekanals (3) an einem Kanalabschnitt oberhalb der Hülse (4) durchgeführt wird.

4. Verfahren nach einem der Ansprüche 1 bis 3, **dadurch gekennzeichnet, daß** die Grundprofilierung des Schmelzekanals (3) durch Einbau eines Düsenkörpers (2), eines Düsenkörpereinsatzes (10, 14) oder eines Dorns (1), eines Dorneinsatzes (7) oder eines der Düse oder des Dorns vorgeschalteten Ringes durchgeführt wird, deren kanalseitige Wandfläche ein den Schmelzefluß beeinflussendes Profil (6) besitzt.

5. Verfahren nach einem der Ansprüche 1 bis 3, **dadurch gekennzeichnet, daß** zur Grundprofilierung eine Hülse (4) verwendet wird, in deren Oberfläche ein den Schmelzefluß formendes Profil (6) eingearbeitet ist.

6. Verfahren nach einem der Ansprüche 1 bis 3, **dadurch gekennzeichnet, daß** zur Grundprofilierung eine zusätzliche elastisch deformierbare Hülse (4') verwendet wird.

7. Verfahren nach einem der Ansprüche 1 bis 3, **dadurch gekennzeichnet, daß** die Grundprofilierung des Schmelzekanals (3) mit stellbeweglichen Schiebern (11, 12) eingestellt wird, durch deren Stellbewegung der Kanalquerschnitt des Schmelzekanals (3) veränderbar ist.

8. Verfahren nach einem der Ansprüche 1 bis 7, **dadurch gekennzeichnet, daß** die Profiltiefe des den Schmelzefluß beeinflussenden Profils (6) zum Ende des Düsenaustrittsspaltes abnimmt und die Grundprofilierung im Austrittsquerschnitt Null oder vernachlässigbar klein ist.

9. Verfahren nach Ansprüche 1 bis 8, **dadurch gekennzeichnet, daß** zur Verformung einer am Dorn (1) und/oder am Düsenkörper (2) angeordneten Hülse (4, 4') unterseitig einführbare Einsätze (7) mit vorher eingestellten Stellelementen (5) verwendet werden.

## Claims

1. A procedure for setting up an annular die for manufacturing parisons, which are expanded into plastic containers in a blow mould, wherein the annular die has a screw channel (3) bordered by a mandrel (1) and an annular die body (2), and wherein the die outlet end of the screw channel (3) is provided with an elastically deformable sleeve (4), whose cross sectional profile can be adjusted using radial setting elements (5), with the following procedural steps:
1.1) The screw channel is subjected to a basic profiling, which is independent of the deformation of the sleeve (4), and generates thick and thin spots running in the longitudinal direction of flow with a distribution in the melt flow tailored to the container cross section to be formed;
1.2) At a prescribed basic profiling, the die outlet gap is corrected by deforming the sleeve (4) in such a way that the wall thickness of the container shaped by the blow mold corresponds to a set value or prescribed profile.

2. The procedure according to claim 1, **characterized in that** the basic profiling of the screw channel is set up for a die gap width with which parisons for medium-weight plastic containers are manufactured, and that only the deformation of the sleeve arranged at the die outlet is corrected for manufacturing geometrically similar containers with a smaller or larger weight.

3. The procedure according to claim 1 or 2, **characterized in that** the basic profiling of the screw channel (3) takes place at a channel section above the sleeve (4).

4. The procedure according to one of claims 1 to 3, **characterized in that** the basic profiling of the screw channel (3) takes place by incorporating a die body (2), a die body insert (10, 14) or a mandrel (1), a mandrel insert (7) or one of the rings upstream from the die or mandrel, whose channel-side wall surface has a profile (6) that influences the melt flow.

5. The procedure according to one of claims 1 to 3, **characterized in that** basic profiling takes place using a sleeve (4) whose surface incorporates a profile (6) that shapes the melt flow.

6. The procedure according to one of claims 1 to 3, **characterized in that** an additional elastically deformable sleeve (4') is used for basic profiling.

7. The procedure according to one of claims 1 to 3, **characterized in that** the basic profiling of the screw channel (3) is set with adjustable sliders (11, 12), whose adjusting movements make the channel cross section of the screw channel (3) variable.

8. The procedure according to one of claims 1 to 7, **characterized in that** the profile depth of the profile (6) influencing the melt flow tapers off toward the end of the die outlet gap, and the basic profiling in the outlet cross section is zero or negligibly small.

9. The procedure according to claims 1 to 8, **characterized in that** inserts (7) introducible from below with previously adjusted setting elements (5) are used to deform a sleeve (4, 4') arranged on the mandrel (1) and/or die body (2).

## Revendications

1. Procédé pour installer une filière à fente annulaire destinée à la fabrication de préformes tubulaires qui sont agrandies de manière à former des récipients en matière plastique dans un moule de soufflage, la filière à fente annulaire comportant un canal (3) pour la matière fondue limité par un mandrin (1) et par un corps de filière (2) annulaire, une douille (4) élastiquement déformable étant prévue à l'extrémité du canal (3) pour la matière fondue située du côté de la sortie de la filière, le profil transversal de ladite douille étant réglable par des éléments de réglage (5) radiaux, comportant les étapes suivantes :
1.1) Le canal pour la matière fondue est soumis à un profilage de base qui est indépendant de la déformation de la douille (4) et qui crée, dans le flux de la matière fondue, des endroits plus larges et d'autres plus minces orientés dans la direction longitudinale du flux et distribués de manière à concorder avec le profil transversal du récipient à former ;
1.2) Si le profilage de base est imposé, la fente de sortie de la filière est corrigée par la déformation de la douille (4) de telle sorte que l'épaisseur de la paroi des récipients mis en forme dans le moule de soufflage correspond à une valeur de consigne ou à un profil imposé.

2. Procédé selon la revendication 1, **caractérisé en ce que** le profilage de base du canal pour la matière fondue est ajusté à une largeur de fente de la filière avec laquelle sont réalisées des préformes destinées à former des récipients en matière plastique de poids moyen et que, pour fabriquer des récipients de géométrie semblable d'un poids inférieur ou supérieur, il suffit de corriger la déformation de la douille disposée en sortie de filière.

3. Procédé selon la revendication 1 ou 2, **caractérisé en ce que** le profilage de base du canal (3) pour la matière fondue est mis en oeuvre dans une partie du canal située en amont de la douille (4).

4. Procédé selon l'une quelconque des revendications 1 à 3, **caractérisé en ce que** le profilage de base du canal (3) pour la matière fondue est mis en oeuvre par l'installation d'un corps de filière (2), d'un insert de corps de filière (10, 14) ou d'un mandrin (1), d'un insert de mandrin (7) ou d'un anneau monté en amont de la filière ou du mandrin et dont la paroi faisant face au canal possède un profil (6) qui influence le flux de la matière fondue.

5. Procédé selon l'une quelconque des revendications 1 à 3, **caractérisé en ce qu'**on utilise, pour le profilage de base, une douille (4) dont la surface est travaillée de manière à présenter un profil (6) qui donnera au flux de la matière fondue sa forme.

6. Procédé selon l'une quelconque des revendications 1 à 3, **caractérisé en ce qu'**on utilise, pour le profilage de base, une douille (4') supplémentaire élastiquement déformable.

7. Procédé selon l'une quelconque des revendications 1 à 3, **caractérisé en ce que** le profilage de base du canal (3) pour la matière fondue est réglé par des vannes de réglage mobiles (11, 12) dont le déplacement fait varier le profil transversal du canal (3) pour la matière fondue.

8. Procédé selon l'une quelconque des revendications 1 à 7, **caractérisé en ce que** la profondeur du profil (6) influençant le flux de matière fondue diminue vers l'extrémité de la fente de sortie de la filière et que le profilage de base dans le profil transversal de la sortie est égal à zéro ou négligeable.

9. Procédé selon l'une quelconque des revendications 1 à 8, **caractérisé en ce que**, pour déformer une douille (4, 4') disposée sur le mandrin (1) et/ou sur le corps de filière (2), on utilise des inserts (7) destinés à être introduits par le bas et pourvus d'éléments de réglage (5) réglés au préalable.
